# EUROPÄISCHE PATENTSCHRIFT

(11) **EP 2 873 222 B1**
(45) Veröffentlichungstag und Bekanntmachung des Hinweises auf die Patenterteilung: **02.01.2019**
(21) Anmeldenummer: 13753547.2
(22) Anmeldetag: 10.07.2013
(51) Int. Cl.: H04L 12/40

(54) **VERFAHREN ZUR SERIELLEN DATENÜBERTRAGUNG**
METHOD FOR SERIAL DATA TRANSMISSION
PROCÉDÉ DE TRANSMISSION DE DONNÉES EN SÉRIE

(30) Priorität: 10.07.2012 DE 102012106210
(43) Veröffentlichungstag der Anmeldung: 20.05.2015
(73) Patentinhaber: Trinamic Motion Control GmbH & Co. KG, 22769 Hamburg (DE)
(72) Erfinder: KUBISCH, Stephan, 20259 Hamburg (DE); DWERSTEG, Bernhard, 25462 Rellingen (DE)
(74) Vertreter: Heun, Thomas
(86) Internationale Anmeldenummer: PCT/DE2013/100257
(87) Internationale Veröffentlichungsnummer: WO 2014/008893

(56) Entgegenhaltungen:
- WO-A1-03/085899
- DE-A1- 10 229 575
- DE-A1-102010 042 311
- FR-A1- 2 949 933
- US-A1- 2002 101 884
- LIN CONSORTIUM: "LIN Specification Package. Revision 2.0", INTERNET CITATION, 23. September 2003 (2003-09-23), Seite 125pp, XP007910142, Gefunden im Internet: URL:http://www7.informatik.uni-erlangen.de /~dulz/fkom/06/Material/3/LIN%20Specificat ion%20Package.pdf [gefunden am 2009-10-14]

## Beschreibung

Die Erfindung betrifft ein Verfahren zur seriellen, insbesondere bidirektionalen Datenübertragung zwischen einem Mikrocontroller oder Computer und einer oder mehreren Peripherie-Einheiten. Die Erfindung betrifft ferner eine Peripherie-Einheit mit einer Schaltungsanordnung zur Anwendung in einem solchen Verfahren.

Zur seriellen Datenübertragung zwischen Computern und Peripheriegeräten sind zahlreiche serielle Schnittstellen-Standards bekannt. Auch wenn dabei die Bits nacheinander übertragen werden, so haben die entsprechenden seriellen Schnittstellen im Allgemeinen zahlreiche Pole und erfordern eine entsprechende Anzahl von Leitungen, über die neben den Datensignalen auch Steuersignale übertragen werden müssen. Zur schaltungstechnischen Realisierung der seriellen Schnittstellen sind standardisierte elektronische Baueinheiten bekannt, die üblicherweise als U-ART (Universal Asynchronous Receiver Transmitter) bezeichnet werden und zum Senden und Empfangen von Daten über die Schnittstelle und die an diese angeschlossenen Leitungen bzw. Einheiten dienen. Die Reihenfolge und die Bedeutung der seriell übertragenden Bits bzw. der Datenrahmen ist dabei z.B. nach dem RS232- oder RS485- oder anderen Standards festgelegt.

Aus der DE 10 2010 042 311 ist ein Verfahren zur Adressierung von Nebenstationen durch eine Hauptstation in einem seriellen Bussystem bekannt. Die Nebenstationen umfassen dabei jeweils eine seriell in eine Datenleitung des Bussystems geschaltete Adressierungsvorrichtung mit einer Schalt- und einer Steuerungseinrichtung, wobei die Schalteinrichtung einer Nebenstation, die während einer Adressierung geschlossen ist, nach dem Schließen ständig geschlossen bleibt.

Der Erfindung liegt die Aufgabe zugrunde, ein Verfahren zur seriellen Übertragung von Daten zwischen einem Mikrocontroller oder Computer und einer oder mehreren Peripherie-Einheiten über eine einzige (d.h. Eindraht-) Leitung oder über zwei differenzielle Leitungen zu schaffen, das auch bei unterschiedlichen Übertragungsgeschwindigkeiten (Baudraten) der Sende- und Empfangseinheiten oder unterschiedlichen Langzeitdriften dieser Geschwindigkeiten zuverlässig arbeitet. Der Erfindung liegt ferner die Aufgabe zugrunde, eine Peripherie-Einheit mit einer Schaltungsanordnung zu schaffen, die zur Anwendung in einem solchen Verfahren geeignet ist.

Gelöst wird diese Aufgabe mit einem Verfahren gemäß Anspruch 1 und einer Peripherie-Einheit gemäß Anspruch 9.

Die erfindungsgemäße serielle Datenübertragung bzw. eine entsprechende Schnittstelle ermöglicht die Steuerung einer Peripherieeinheit mit jeder üblichen UART-Mikrocontrollereinheit. Dabei wird eine Leitung zum Senden und Empfangen in ähnlicher Weise wie bei einer auf dem RS485-Standard basierenden Schnittstelle gemeinsam benutzt. Die Datenübertragung wird vorzugsweise unter Anwendung einer zyklischen Redundanz-Prüfung gesichert, so dass auch größere Entfernungen (z.B. über Kabel zwischen zwei Baugruppen) überbrückt werden können, ohne dass die Gefahr besteht, dass Befehle verfälscht werden oder verloren gehen, selbst wenn die Leitungsverbindung elektromagnetischen Störungen ausgesetzt ist. Eine automatische Detektion der Baudrate der Datenübertragung macht diese Schnittstelle unempfindlich gegenüber Fertigungstoleranzen und einer Langzeitdrift von internen Taktfrequenzgeneratoren. Das bevorzugte Adressierungsschema macht die Schnittstelle einfach und flexibel in der Anwendung.

Die abhängigen Ansprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: eine beispielhafte Datagramm-Struktur eines Befehls für einen Schreibzugriff mit 7 Register-Adressbits und 4 Datenbytes;
- Fig. 2: eine beispielhafte Datagramm-Struktur eines Befehls für einen Lesezugriff (Request);
- Fig. 3: eine beispielhafte Datagramm-Struktur einer Antwort auf einen Befehl für einen Lesezugriff mit 7 Register-Adressbits und 4 Datenbytes;
- Fig. 4: ein Blockschaltbild mit einem Mikrocontroller, der über eine einzige Leitung mit mehreren Peripherie-Einheiten verbunden ist;
- Fig. 5: ein Blockschaltbild mit einem Mikrocontroller, der über zwei differentielle Leitungen mit mehreren Peripherie-Einheiten verbunden ist;
- Fig. 6: ein schematisches Flussdiagramm der Signalverarbeitung in einer Peripherie-Einheit;
- Fig. 7: ein Blockschaltbild einer Peripherie-Einheit; und
- Fig. 8: ein schematisches Flussdiagramm der Signalverarbeitung in einer Einheit zur Baudraten-Ermittlung.

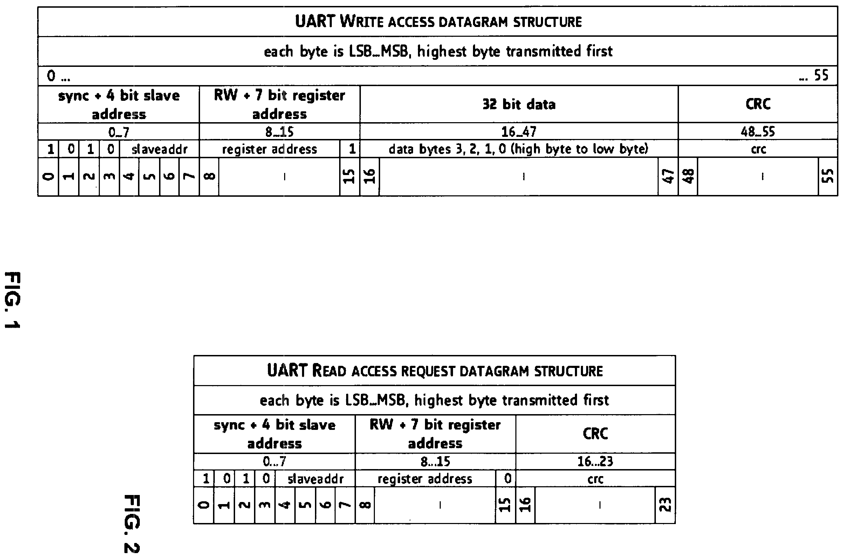

Figur 1 zeigt eine Datagramm-Struktur eines Befehls für einen UART-Schreibzugriff, der von einem Mikrocontroller oder Computer (im Folgenden "Master-Einheit") zu einer Peripherie-Einheit (im Folgenden "Slave-Einheit") übertragen wird. Der Befehl umfasst im dargestellten Fall beispielhaft insgesamt 56 Bits und somit sieben Bytes mit je acht Bits, die in der in der Figur 1 dargestellten Reihenfolge von links nach rechts übertragen werden. Die ersten vier Bits 0 bis 3 des ersten Bytes (erstes Halbbyte, erstes Nibble) dienen dabei der Baudraten-Synchronisation der Slave-Einheiten.

Damit ist es möglich, bei jeder Übertragung eines Datagramms eine Synchronisation von internen Baudraten-Teilern aller Slave-Einheiten mit einem Master-Takt vorzunehmen. Auf diese Weise werden die Baudraten der Slave-Einheiten entsprechend angepasst und Schwankungen von deren interner Taktfrequenz werden kompensiert. Die Master-Baudrate kann somit innerhalb eines vorgegebenen Bereiches frei gewählt werden. Üblicherweise ist bei Annahme einer Taktfrequenz von 20 MHz eine minimale Baudrate von 9000 erlaubt (ungünstigster Fall für eine niedrige Baudrate). Die maximale Baudrate liegt unter Berücksichtigung der erforderlichen Stabilität des Baudraten-Taktes zum Beispiel bei etwa 1/16 der Taktfrequenz der jeweiligen Slave-Einheit. Dies ermöglicht auch den Betrieb von mehreren unterschiedlich schnellen Slave-Einheiten am gleichen Bus mit jeweils unterschiedlicher Baudrate. Jedes übertragene Byte beginnt mit einem Start-Bit (logisch 0, niedriger Pegel auf SWIOP) und endet mit einem Stopp-Bit (logisch 1, hoher Pegel auf SWIOP). Die Bit-Zeit wird durch Messen der Zeit vom Beginn eines Start-Bits (1 zu 0 Übergang) bis zum Ende des ersten Halbbytes (1 zu 0 Übergang von Bit 2 auf Bit 3) gemessen.

Die Synchronisation und Baudraten-Erkennung erfolgt dabei bei einer Ausführungsform zum Beispiel mit Hilfe von internen Zählern und Vergleichsoperationen. Nachdem der Beginn einer neuen Übertragung an einem ersten Startbit (insbesondere dessen fallender Flanke) erkannt wurde, wird ein interner Zähler gestartet, der mit der Taktfrequenz der Slave-Einheit arbeitet. Dabei wird angenommen, dass der Baudraten-Takt vorzugsweise maximal etwa 1/16 der Taktfrequenz der Slave-Einheit sein sollte, um ein ausreichendes Oversampling zu gewährleisten. Mit Hilfe des Zählers wird die Dauer der ersten vier Synchronisationsbits (erstes Halbbyte) mit den Pegelwechseln (Flanken) als Stützpunkte vermessen. Aus dem Zähler ergeben sich dann die notwendigen Sample-Zeitpunkte für die nachfolgenden Bytes in Form von Zählerständen. Mit jedem folgenden Startbit eines nächsten Bytes wird nun dieser oder ein anderer Zähler (erneut) gestartet und mit Hilfe von Komparatoren werden zu den vorher berechneten Sample-Zeitpunkten die Informationen der Datenleitung übernommen. Das Empfangen der Daten endet entweder erfolgreich bei korrekter Detektion des Stopp-Bits oder nach einem festgelegten Timeout.

Die zweiten vier Bits 4 bis 7 (zweites Nibble) des ersten Bytes bestimmen die Adresse der angesprochenen Slave-Einheit. Wenn ein externer Adress-Pin NEXTADDR an den Slave-Einheiten gesetzt ist, werden die Adressen der Slave-Einheiten um jeweils den Wert 1 inkrementiert, so dass bei vier Adress-Bits bis zu 15 Slave-Einheiten mit nur einer Datenleitung verbunden und adressiert werden können (siehe unten).

Gemäß Figur 1 bezeichnen zum Beispiel die Bits 8 bis 15, d.h. das zweite Byte, eine gewünschte Registeradresse der adressierten Slave-Einheit, wobei das Bit 8 ein Read/Write Bit darstellt, mit dem angegeben wird, ob aus dem adressierten Register Daten ausgelesen oder Daten in dieses eingeschrieben werden sollen.

Die nächsten Bits 16 bis 47 (d.h. die nächsten 4 Bytes) stellen ein zum Beispiel 32 Bit breites Datenwort dar. Je nach Anwendung können der Nutzdatenbreite, ebenso wie der Breite der Registeradressen, jedoch auch andere Werte gegeben werden.

Die Bytes werden dabei vorzugsweise in der Reihenfolge vom höchstwertigen zum niedrigstwertigen Byte übertragen, wobei die Bits innerhalb eines Bytes in der Reihenfolge vom LSB zum MSB gesendet werden.

Die Bits 48 bis 55 (d.h. das siebte und letzte Byte) dienen schließlich zur Fehlerdetektion durch zyklische Redundanzprüfung (CRC).

Die Kommunikation mit diesen Schreibbefehlen wird vorzugsweise dann zurückgesetzt, wenn eine Unterbrechung mit einer Zeitdauer von zum Beispiel mehr als 63 Bit-Zeiten auftritt. In diesem Fall muss die Kommunikation neu gestartet werden. Dadurch wird ermöglicht, dass die Master-Einheit die Kommunikation im Falle eines Übertragungsfehlers zurücksetzt.

Jeder durch die angesprochene Slave-Einheit als gültig erkannte Schreibbefehl (d.h. der empfangene Schreibbefehl ist an die betreffende Slave-Einheit adressiert und nach CRC-Prüfung fehlerfrei) wird durch diese durch Inkrementieren eines internen zyklischen Datagramm-Zählers (8 Bit) bestätigt. Dadurch ist es möglich, dass die Master-Einheit durch Auslesen des Datagramm-Zählers überprüfen kann, ob eine Initialisierungs-Sequenz oder einzelne Schreib-Zugriffe erfolgreich waren. Durch einen Lese-Zugriff wird der Zählerstand nicht verändert.

Figur 2 zeigt eine Datagramm-Struktur eines Befehls für einen UART-Lesezugriff, der von einer Master-Einheit zu einer Slave-Einheit übertragen wird. Der Befehl umfasst im dargestellten Fall beispielhaft insgesamt 24 Bits und somit drei Bytes mit je acht Bits, die wiederum in der in der Figur 2 dargestellten Reihenfolge von links nach rechts und wie oben erläutert übertragen werden.

Die Datagramm-Struktur entspricht hinsichtlich ihres Aufbaus dem oben im Zusammenhang mit Figur 1 beschriebenen Befehl für einen Schreibzugriff mit der einzigen Ausnahme, dass der Lesezugriff kein Datenwort beinhaltet, da ja die Funktion dieses Befehls darin besteht, neben der Adressierung der gewünschten Slave-Einheit (Bits 4 bis 7) nur das Register zu adressieren (Bits 9 bis 15), dessen Inhalt ausgelesen und an die Master-Einheit übertragen werden soll. Dabei antwortet die Slave-Einheit vorzugsweise mit der gleichen Baudrate, wie sie durch die Master-Einheit für den Lesezugriff verwendet wurde.

Um einen sauberen Übergang auf dem Datenbus vom Senden durch die Master-Einheit zum Senden durch eine Slave-Einheit sicherzustellen, sendet die Slave-Einheit die Antwort auf einen Lesezugriff nicht unmittelbar, sondern vorzugsweise erst nach dem Verstreichen einer programmierbaren Verzögerungszeit nach dem Empfang eines Datagramms für einen Lesezugriff. Diese Verzögerungszeit kann entsprechend den Erfordernissen der Master-Einheit zum Beispiel zu einem Vielfachen von 8 Bit-Zeiten unter Verwendung der SENDDELAY-Zeiteinstellung (Vorgabe = 8 Bit-Zeiten) eingestellt werden. Der Parameter SENDDELAY ist vorzugsweise in einem Register der Slave-Einheit abgelegt.

Vorzugsweise adressiert dabei eine Master-Einheit einen Schreib- oder Lesebefehl zur gleichen Zeit stets nur an eine Slave-Einheit und adressiert eine andere Slave-Einheit erst dann, wenn im Fall eines Schreibbefehls eine vorbestimmte Zeitdauer abgelaufen ist, oder, im Fall eines Lesebefehls, von der zuerst adressierten Slave-Einheit das Antwort-Datagramm eingegangen ist.

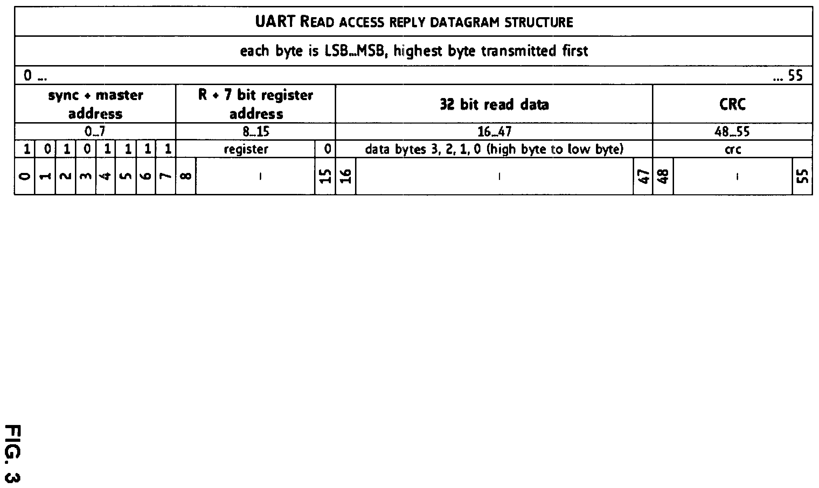

Figur 3 zeigt eine beispielhafte Datagramm-Struktur der Antwort einer Slave-Einheit auf den Empfang eines Datagramms für einen Lesezugriff.

Die Datagramm-Struktur entspricht hinsichtlich ihres Aufbaus dem oben im Zusammenhang mit Figur 1 beschriebenen Befehl für einen Schreibzugriff mit den beiden Ausnahmen, dass zum einen das 32 Bit Datenwort die entsprechend der Anforderung aus dem adressierten Register ausgelesenen Daten beinhaltet, und zum anderen die Bits 4 bis 7 nicht die Adresse der Slave-Einheit, sondern die Adresse der Master-Einheit darstellen, wobei vorzugsweise ein einheitlicher Adress-Code %1111 verwendet wird. Dieser Adress-Code ist vorzugsweise ausschließlich für alle zu der Master-Einheit übertragenen Datagramme mit den angeforderten Daten reserviert.

Nachdem das letzte Bit des Antwort-Datagramms gesendet wurde, wird die sendende Slave-Einheit vorzugsweise für 4 Bit-Zeiten inaktiv geschaltet (Timeout), bevor diese wieder Datagramme (d.h. Schreib- oder Lesebefehle) empfangen kann. Dies gilt vorzugsweise auch dann, wenn eine Slave-Einheit ein Datagramm empfängt, das nicht an die eigene Adresse adressiert ist.

Schließlich wird vorzugsweise auch kontinuierlich geprüft, ob die eingegangenen Datagramme vollständig sind, d.h. in voller Länge empfangen wurden. Wenn nur ein Teil eines Datagramms eingegangen ist und innerhalb einer vorbestimmten Zeitdauer der übrige Teil des Datagramms nicht empfangen wird, so wird der eingegangene Teil des Datagramms verworfen bzw. gelöscht. Diese vorbestimmte Zeitdauer wird auch als Empfangs-Timeout bezeichnet.

Zum Prüfen der Datagramme für Schreib- und Lesezugriff sowie des Datagramms, mit dem die ausgelesenen Daten zu der Master-Einheit übertragen werden, auf Fehlerfreiheit dient, wie in den Figuren 1 bis 3 dargestellt, ein zum Beispiel 8 Bit breites CRC-Polynom.

Damit können bis zu acht einzelne Bit-Fehler erfasst werden. Dabei wird vorzugsweise keine Fehlerkorrektur vorgenommen, sondern es wird nur ausgewertet, ob ein Übertragungs- oder Empfangsfehler in dem betreffenden Datagramm aufgetreten ist. Wenn ein solcher Fehler detektiert wird, so wird das fehlerhafte Datagramm verworfen. Das CRC8-ATM Polynom mit einem Anfangswert von 0 wird vom LSB bis zum MSB einschließlich der Synchronisierungs- und Adress-Bits (Bits 0 bis 7) angewandt. Dabei wird davon ausgegangen, dass die Synchronisierungs-Bits (Bits 0 bis 3) stets korrekt sind.

Damit ist sichergestellt, dass eine Slave-Einheit nur auf Datagramme reagiert, die korrekt übermittelt wurden und außerdem die eigene Slave-Adresse beinhalten.

Das CRC-Polynom kann mit einer CPU unter Anwendung einer Bit-weisen zyklischen XOR-Berechnung von eingehenden und abgehenden Bits, die in einem 8 Bit CRC-Register akkumuliert werden, berechnet werden. Für eine parallele 8 Bit-Berechnung des CRC-Polynoms in einer CPU kann eine Tabelle (look-up table) verwendet werden, wobei auch andere Algorithmen allgemein bekannt sind.

Das UART-Interface beinhaltet die folgenden drei Anschlüsse: einen gemeinsamen Datenein- und Datenausgangsanschluss SWIOP für nicht-invertierte Daten, einen gemeinsamen Datenein- und Datenausgangsanschluss SWION für invertierte Daten zur Anwendung bei einer differenziellen Übertragung, sowie einen optionalen Anschluss für ein Adressen-Inkrementierungssignal NEXTADDR für ein sequentielles Adressierungsschema, wenn mehr als eine (d.h. bis zu 15) Slave-Einheiten an den gleichen Bus angeschlossen sind.

Im UART-Mode überprüft jede Slave-Einheit kontinuierlich ihre seriellen Datenanschlüsse SWIOP und SWION auf korrekt empfangene Datagramme mit ihrer eigenen Adresse. Während dieser Zeit sind diese beiden Anschlüsse als Eingänge geschaltet.

Die Slave-Einheiten stellen jeweils die Baudrate der Datenübertragung auf der Grundlage der Synchronisierungs-Bits (Bits 0 bis 3 der Datagramme) wie oben beschrieben ein. Im Falle eines Lesezugriffs schaltet die betreffende Slave-Einheit ihre Ausgangs-Treiber auf die Datenanschlüsse SWIOP und SWION und sendet das Antwort-Datagramm mit der gleichen Baudrate.

In dem Fall, in dem nur eine oder zwei Slave-Einheiten durch eine Master-Einheit adressiert werden müssen, kann die Adress-Auswahl in einfacher Weise dadurch erfolgen, dass die NEXTADDR-Anschlüsse an den Slave-Einheiten auf unterschiedliche Pegel gesetzt werden.

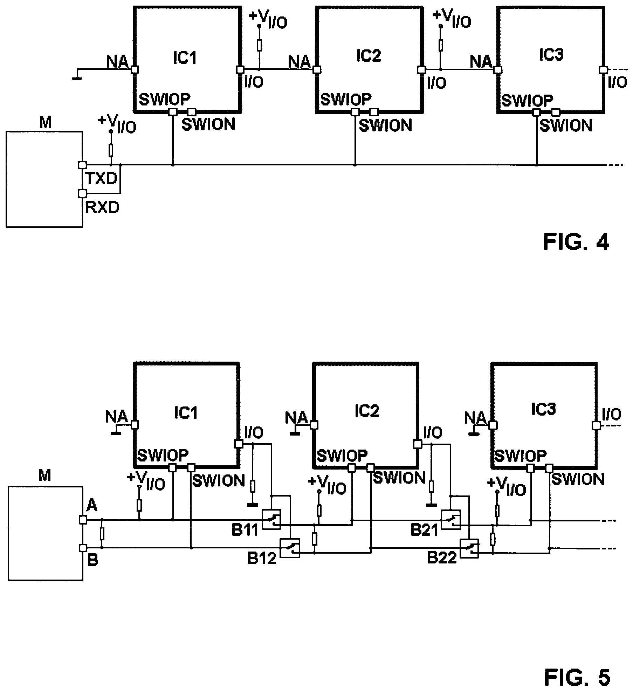

Figur 4 zeigt ein Blockschaltbild mit einer Master-Einheit M, die einen Mikroprozessor mit einer UART-Software beinhaltet und über eine einzige bidirektionale Datenleitung mit dem Datenein- und Datenausgangsanschluss (hier SWIOP) mehrerer Slave-Einheiten (Peripherie-Einheiten) IC1, IC2,... verbunden ist, wobei in der dargestellten Weise bis zu fünfzehn Slave-Einheiten adressiert werden können.

Zu diesem Zweck wird der NEXTADDR-Anschluss NA der ersten Slave-Einheit IC1 auf ein Bezugspotential bzw. Masse gelegt. Einer der allgemeinen I/O-Anschlüsse der ersten Slave-Einheit IC1 wird mit dem NEXTADDR-Anschluss NA der zweiten Slave-Einheit IC2 unter Verwendung eines an einem logischen "1"-Pegel +V_{I/O} anliegenden Pull-up Widerstandes verbunden. Die folgenden Slave-Einheiten IC2, IC3,.. werden in dergleichen Weise miteinander verschaltet.

Da nach dem Einschalten oder Zurücksetzen des Systems die Default-Adresse 0 ist, besitzt zu Beginn die Slave-Einheit IC1 die Adresse 0. Alle anderen Slave-Einheiten besitzen die Adresse 1, da deren NEXTADDR-Anschluss NA durch den Pull-up Widerstand auf logisch 1 gezogen wird und damit die interne Default-Adresse 0 um 1 erhöht wird.

Somit empfängt und beantwortet nur die erste Slave-Einheit IC1 nur solche Datagramme, die an die Adresse 0 gerichtet sind. Die folgenden Slave-Einheiten IC2, IC3,... reagieren nicht auf Datagramme mit der Adresse 0, sondern nur auf solche mit der Adresse 1.

Die erste Slave-Einheit IC1 wird nun adressiert und auf ihre gewünschte Slave-Adresse programmiert. Dabei wird vorzugsweise von der größtmöglichen Adresse, maximal 14 bzw. der Anzahl der Slave-Einheiten minus 1, rückwärts gearbeitet. Die erste Slave-Einheit IC1 erhält deshalb die Adresse 14 und ist ab sofort eindeutig mit dieser Adresse adressierbar.

Dabei ist zu beachten, dass dann, wenn die erste Slave-Einheit mit ihrer Slave-Adresse initialisiert worden ist, in diesem ersten Schritt die Slave-Einheit IC1, deren allgemeiner I/O-Anschluss mit dem NEXTADDR-Anschluss NA der nächsten (zweiten) Slave-Einheit IC2 verbunden ist, als Ausgang programmiert und auf 0 gesetzt werden muss. Dies bewirkt, dass zur Default-Adresse dieser nächsten Slave-Einheit nicht mehr 1 addiert wird und diese nächste Slave-Einheit nun die einzige Slave-Einheit mit der Adresse 0 am Bus ist, so dass diese eindeutig adressierbar ist.

Im Anschluss daran kann nun auf diese nächste (zweite) Slave-Einheit IC2 zugegriffen werden, um diese auf ihre gewünschte Slave-Adresse zu programmieren. Diese würde mit Adresse 13 konfiguriert werden. Danach können in entsprechender Weise sequentiell die weiteren Slave-Einheiten IC3, IC4, ... auf ihre Slave-Adressen programmiert werden.

Die für diese Art der sequentiellen Adresskonfiguration nötigen Datagramme sind nahezu identisch. Für die Konfiguration jeder Slave-Einheit sind jeweils zwei Datagramme erforderlich. Das erste Datagramm ist immer an Adresse 0 gerichtet, da immer nur jeweils eine Slave-Einheit die Adresse 0 trägt, und konfiguriert diese Slave-Einheit mit der gewünschten Adresse neu. Das zweite Datagramm ist jeweils an die gerade neu vergebene Adresse (und somit an die gleiche Slave-Einheit) gerichtet und bewirkt, dass der allgemeine I/O-Anschluss dieser Slave-Einheit auf logisch 0 gesetzt wird, so dass die nächste Slave-Einheit in gleicher Weise neu Adresskonfiguriert werden kann.

Figur 5 zeigt ein Blockschaltbild mit einer Master-Einheit M, die einen Mikroprozessor mit einem RS485 Transceiver beinhaltet, und die über zwei differentielle bidirektionale Datenleitungen und die ersten und zweiten Dateneingangs- und Datenausgangsanschlüsse SWIOP und SWION mit mehreren Slave-Einheiten IC1, IC2, ... verbunden ist, wobei die NEXTADDR-Anschlüsse NA nicht benötigt werden. Auf diese Weise können wiederum bis zu fünfzehn Slave-Einheiten adressiert werden.

In die beiden Datenleitungen sind seriell Bus-Schalter B11, B12; B21, B22; ... geschaltet, und zwar ein erster und ein dritter usw. Bus-Schalter B11, B21 in die erste Datenleitung sowie ein zweiter und ein vierter usw. Bus-Schalter B12, B22 in die zweite Datenleitung. Dabei liegt der erste Bus-Schalter B11 zwischen den ersten Dateneingangs- und Datenausgangsanschlüssen SWIOP der ersten und der zweiten Slave-Einheit IC1, IC2 und der dritte Bus-Schalter B21 zwischen den ersten Dateneingangs- und Datenausgangsanschlüssen SWIOP der zweiten und der dritten Slave-Einheit IC2, IC3.

Entsprechend liegt der zweite Bus-Schalter B12 zwischen den zweiten Dateneingangs- und Datenausgangsanschlüssen SWION der ersten und der zweiten Slave-Einheit IC1, IC2 und der vierte Bus-Schalter B22 zwischen den zweiten Dateneingangs- und Datenausgangsanschlüssen SWION der zweiten und der dritten Slave-Einheit IC2, IC3.

Der erste und der zweite Bus-Schalter B11, B12 kann dabei über einen allgemeinen I/O-Anschluss der ersten Slave-Einheit IC1 geöffnet und geschlossen werden, während der zweite und der dritte Bus-Schalter B21, B22 über einen allgemeinen I/O-Anschluss der zweiten Slave-Einheit IC2 geöffnet und geschlossen werden kann. Dazu können beispielsweise standardisierte Bauelemente vom Typ 74HC4066 genutzt werden.

Wenn der erste und der zweite Bus-Schalter B11, B12 geöffnet ist, kann die erste Slave-Einheit IC1 auf die gewünschte Adresse programmiert werden. Daraufhin wird der erste und der zweite Bus-Schalter B11, B12 geschlossen, während der dritte und der vierte Bus-Schalter B21, B22 geöffnet bleiben, so dass die zweite Slave-Einheit IC2 auf die gewünschte Adresse programmiert werden kann usw..

Durch das sequentielle Schließen der Bus-Schalter B11, B12; B21, B22; ... mittels jeweils eines entsprechenden Schaltpegels an dem allgemeinen I/O-Anschluss einer der Slave-Einheiten kann also die jeweils hinter dem betreffenden Bus-Schalter liegende Slave-Einheit adressiert bzw. auf die gewünschte Adresse programmiert werden, wobei das Adressierungsschema das gleiche ist, wie es oben mit Bezug auf Figur 4 beschrieben wurde. Dabei wird vorzugsweise mit der größtmöglichen im System auftretenden Adresse begonnen, d.h. die erste Slave-Einheit IC1 wird im ersten Schritt mit der Adresse 14 konfiguriert, die zweite Slave-Einheit IC2 im zweiten Schritt mit der Adresse 13, die dritte Slave-Einheit IC3 im dritten Schritt mit der Adresse 12 usw..

Schließlich ist es auch möglich, die beiden in den Figuren 4 und 5 beschriebenen Adressierungsschemata gemeinsamen in einem System zu verwenden. Ein solches System kann z.B. zwei Platinen mit jeweils zwei Slave-Einheiten beinhalten, wobei auf einer Schaltplatine die Slave-Einheiten gemäß Figur 4 durch unterschiedliche Pegel an dem NEXTADDR-Anschlüssen adressiert und die Slave-Einheiten auf der anderen Schaltplatine gemäß Figur 5 mittels der Bus-Schalter adressiert werden.

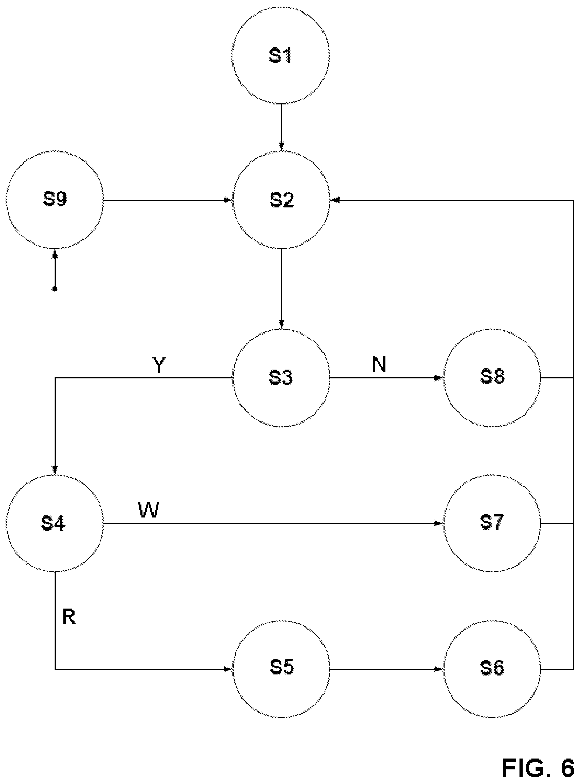

Figur 6 zeigt ein Flussdiagramm der Signalverarbeitung in einer Slave-Einheit.

Nach dem Einschalten oder Zurücksetzen der Slave-Einheit in einem ersten Schritt S1 befindet sich die Slave-Einheit in einem Startzustand, in dem die Startbit- bzw. Startzustandserkennung und die Baudraten-Erkennung aktiv ist (zweiter Schritt S2).

Es sei angenommen, dass die Slave-Einheit in einem dritten Schritt S3 ein Datagramm mit einem der oben beschriebenen Schreib- oder Lesebefehle (d.h. Adress- und Zugriffsbyte) empfängt. Wie oben erläutert wurde, wird bei dem Empfang eines solchen Datagramms die Baudrate automatisch erfasst und zur Synchronisation der Baudrate der Slave-Einheit verwendet. Anschließend wird geprüft, ob das empfangene Datagramm an die betreffende Slave-Einheit adressiert ist und somit deren (eigene) Adresse beinhaltet oder nicht.

Wenn dies der Fall ist (Y), werden in einem vierten Schritt S4 die weiteren Bytes des empfangenen Datagramms einschließlich der Frame Check Sequence (FCS) ausgewertet, und es wird die CRC-Berechnung durchgeführt. Wenn die CRC-Berechnung ergibt, dass das Datagramm fehlerfrei empfangen wurde, werden im Falle eines Lesebefehls (R) die Daten aus dem adressierten Register ausgelesenen. Wenn das Datagramms nicht fehlerfrei ist, wird es verworfen.

Mit einem fünften Schritt S5 wird dann zunächst die oben beschriebene Verzögerungszeit nach dem Empfang eines Datagramms abgewartet, bevor der Sendevorgang gestartet wird und mit einem sechsten Schritt S6 die ausgelesenen Daten einschließlich der Frame Check Sequence (FCS) über die Datenleitung und somit an die Master-Einheit versendet werden. Der Ablauf wird dann mit einem Rücksprung zu dem zweiten Schritt S2 wiederholt, wobei vorzugsweise die genannte Timeout aktiviert wird, während der die Slave-Einheit inaktiv ist, bevor sie wieder Datagramme empfangen kann.

Wenn in dem vierten Schritt S4 festgestellt wird, dass ein Schreibbefehl (W) empfangen wurde (und dieser Befehl korrekt empfangen worden ist), so wird der Ablauf mit dem alternativen siebten Schritt S7 fortgesetzt, mit dem die übermittelten Daten in das adressierte Register eingeschrieben werden und vorzugsweise auf eine entsprechende Bestätigung durch die Slave-Einheit gewartet wird. Nachdem dieser Vorgang erfolgreich abgeschlossen worden ist, wird der Ablauf mit einem Rücksprung zu dem zweiten Schritt S2 und vorzugsweise nach Ablauf des genannten Timeout wiederholt.

Wenn in dem dritten Schritt S3 festgestellt wird, dass das empfangene Datagramm nicht an die betreffende Slave-Einheit adressiert ist und somit nicht die eigene Adresse beinhaltet (N), wird der Ablauf mit dem achten Schritt S8 fortgesetzt, mit dem wiederum vorzugsweise das oben genannte Timeout aktiviert wird. Nach dem Verstreichen des Timeout wird der Ablauf durch Rücksprung zu dem zweiten Schritt S2 wiederholt.

Wenn in dem vierten Schritt S4 aufgrund der CRC-Berechnung festgestellt wird, dass das empfangene Datagramm nicht fehlerfrei ist, wird der Ablauf mit dem neunten Schritt S9 fortgesetzt, mit dem das Datagramm verworfen wird, bevor dann der Ablauf mit einem Rücksprung zu dem zweiten Schritt S2 wiederholt wird. Dieser neunte Schritt S9 kann auch aus jedem anderen Zustand der Slave-Einheit heraus aktiviert werden, wenn zum Beispiel innerhalb des oben genannten Empfangs-Timeout kein vollständiges Datagramm empfangen wurde.

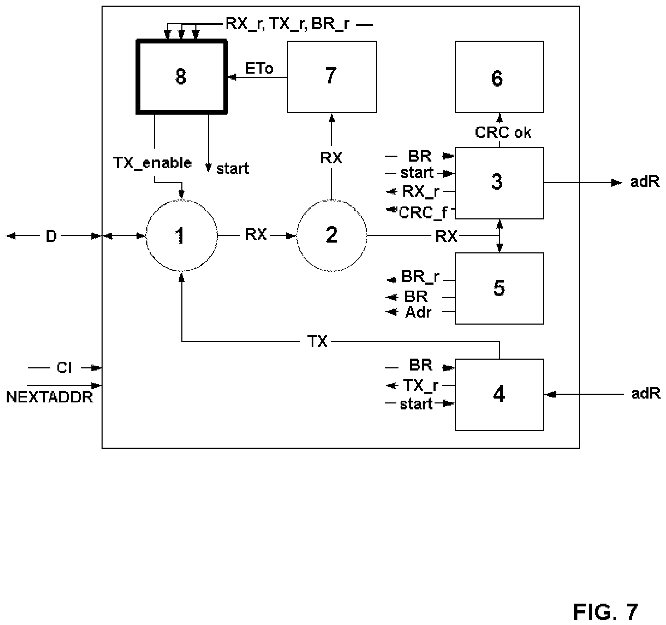

Figur 7 zeigt beispielhaft ein Blockschaltbild wesentlicher Komponenten einer Slave-Einheit, soweit sie das erfindungsgemäße Interface betreffen. An der Einheit liegt ein Systemtakt Cl und das oben erläuterte NEXTADDR Signal an.

Die Slave-Einheit beinhaltet eine Umschalteinrichtung 1, die mit einem Anschluss für eine einzelne oder differentielle Datenleitung D verbunden ist, wobei mit der Umschalteinrichtung 1 zwischen dem Senden und dem Empfangen von Datagrammen umgeschaltet wird. Wenn über die Datenleitung Dein Datagramm empfangen wird, so wird dieses Datagramm RX über die Umschalteinrichtung 1 einer Datensignal-Synchronisierungseinheit 2 zugeführt, die das externe asynchrone Datensignal auf Basis des Systemtaktes einsynchronisiert.

Von dort wird das empfangene Datagramm RX einer Empfangseinheit 3 übermittelt, mit der zunächst eine Adress- und CRC-Fehlerprüfung durchgeführt und dann in Abhängigkeit davon, welche Art von Befehl das Datagramm beinhaltet, ein Lese- oder Schreibzugriff auf das adressierte Register adR vorgenommen wird. Die Empfangseinheit 3 ist zudem mit einen Zähler 6 zum Zählen von empfangenen gültigen Datagrammen (CRC ok) für Schreibbefehle gemäß obiger Erläuterung verbunden. Wenn bei der CRC-Fehlerprüfung ein Fehler erkannt wird, wird statt dessen eine entsprechendes Fehlersignal CRC_f ausgegeben und das Datagramm verworfen.

Im Falle eines Lesebefehls werden die aus dem adressierten Register adR ausgelesenen Daten einer Sendeeinheit 4 zugeführt, mit der auch eine CRC-Berechnung durchgeführt wird und die ausgelesenen Daten TX dann über die Umschalteinrichtung 1 und die Datenleitung D zu der Master-Einheit versendet werden.

Die Datensignal-Synchronisierungseinheit 2 ist ferner mit einer Einheit 5 zur automatischen Baudraten-Ermittlung verbunden. In der Einheit 5 zur Baudraten-Ermittlung wird insbesondere das erste Nibble des ersten Bytes mit den Synchronisationsbits zur Ermittlung der für dieses Datagramm genutzten Baudrate BR betrachtet. Sobald die Baudrate ermittelt wurde, wird diese an die Empfangseinheit 3 und die Sendeeinheit 4 übermittelt und ein Fertig-Signal BR_r gesetzt.

Die Datensignal-Synchronisierungseinheit 2 ist schließlich auch mit einer Einheit 7 zur kontinuierlichen Prüfung auf Empfangs-Timeouts verbunden. Diese Einheit 7 detektiert, ob nach einem empfangenen Startbit in einem definierten zeitlichen Rahmen ein Stoppbit empfangen wird. Geschieht dies nicht, wird, wie oben erläutert wurde, ein Empfangs-Timeout ETo aktiviert.

Die Einheit 8 stellt schließlich eine Steuereinheit dar, die bevorzugt als Zustandsautomat realisiert ist, die den Gesamtablauf in der Slave-Einheit kontrolliert und regelt. Zu diesem Zweck empfängt die Einheit 8 ein Fertig-Signal RX_r von der Empfangseinheit 3, das erzeugt wird, wenn die empfangenen Daten in das adressierte Register eingetragen worden sind, ein Fertig-Signal TX_r von der Sendeeinheit 4, das erzeugt wird, wenn die Daten aus dem adressierten Register ausgelesen worden sind und an die Master-Einheit übermittelt werden können, sowie ein Fertig-Signal BR_r von der Einheit 5 zur automatischen Baudraten-Ermittlung, das erzeugt wird, wenn die Baudrate ermittelt worden ist.

Ferner empfängt die Einheit 8 das Empfangs-Timeout-Signal ETo von der Einheit 7 zur kontinuierlichen Prüfung auf Empfangs-Timeouts und übermittelt entsprechend ein Sende-Freigabe- bzw. Umschaltsignal TX_enable an die Umschalteinrichtung 1 sowie ein Start-Signal start an die Sendeeinheit 4 oder ein Start-Signal start an die Empfangseinheit 3. Der Gesamtablauf im Einzelnen entspricht dabei dem in Figur 6 gezeigten Ablaufdiagramm.

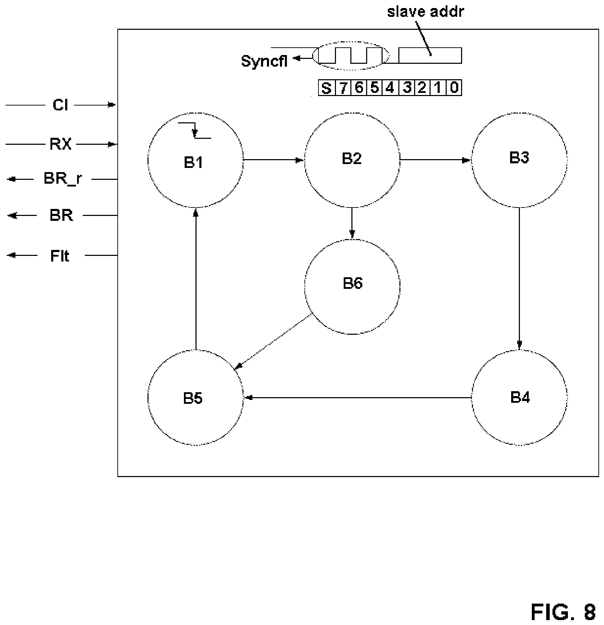

Figur 8 zeigt schließlich ein schematisches, beispielhaftes Flussdiagramm der wesentlichen Funktionsabläufe bzw. Schritte in einer Einheit 5, mit der gemäß obigen Erläuterungen die Baudrate eines empfangenen Datagramms erkannt und eine Baudraten-Synchronisation durchgeführt werden kann.

Mit einem ersten Schritt B1 wird der Beginn des Empfangs eines Datagramms RX anhand von dessen Start-Bit, insbesondere der fallenden Flanke des Start-Bits, erkannt. Mit dieser Flanke wird in einem zweiten Schritt B2 ein Zähler gestartet, der mit der Taktfrequenz Cl der Slave-Einheit arbeitet und mit dem die Dauer der ersten vier Synchronisationsbits (erstes Halbbyte des Datagramms) mit den insgesamt fünf Pegelwechseln (Syncfl) als Stützpunkten vermessen wird. Aus dieser Dauer wird dann in einem dritten Schritt B3 die Baudrate BR des einlaufenden Datagramms RX ermittelt. Ferner werden in einem vierten Schritt B4 auf der Basis des Zählerstandes die Sample-Zeitpunkte für die nachfolgenden Bytes des Datagramms berechnet. Mit jedem nächsten Start-Bit eines nächsten übertragenen Bytes wird nun dieser oder ein anderer Zähler (erneut) gestartet, und mit Hilfe von Komparatoren werden zu den im vierten Schritt B4 berechneten Sample-Zeitpunkten die Informationen des über die Datenleitung übermittelten Datagramms übernommen.

Nach dem Ende des Datagramms nimmt die Baudratenerkennung schließlich mit einem fünften Schritt B5 einen Wartezustand ein, bis sich der Ablauf bei Erkennung eines Start-Bits mit dem ersten Schritt B1 wiederholt.

Sofern in dem zweiten Schritt B2 ein Fehler Flt durch einen Zählerüberlauf oder ein Timeout oder durch eine zu hohe Baudrate oder ein falsches oder fehlendes Stopp-Bit auftritt bzw. mit einem sechsten Schritt B6 erkannt wird, wird der Ablauf durch direkten Sprung in den Wartezustand gemäß dem fünften Schritt B5 beendet.

An entsprechenden Ausgängen der Einheit 5 liegt die ermittelte Baudrate BR, ein Fertig-Signal BR_r zur Anzeige, dass die Baudrate ermittelt wurde, sowie ggf. ein Fehlersignal Flt an.

Somit kann also bei jeder Übertragung eines Datagramms eine erneute Baudraten-Synchronisierung der betreffenden Peripherie- bzw. Slave-Einheit erfolgen und somit auch jede Peripherie bzw. Slave-Einheit mit einer anderen Baudrate angesprochen werden.

## Patentansprüche

1. Verfahren zur seriellen Datenübertragung zwischen einem Mikrocontroller oder Computer und einer oder mehreren Peripherie-Einheiten, über eine Eindraht-Datenleitung oder zwei differentielle Datenleitungen und mittels Datagrammen für:
- einen Schreibzugriff, der die Adresse einer Peripherie-Einheit, die Adresse eines Registers der Peripherie-Einheit sowie ein Daten-Wort mit in das adressierte Register einzuschreibenden Daten beinhaltet; und für:
- einen Lesezugriff, der die Adresse einer Peripherie-Einheit sowie die Adresse eines auszulesenden Registers der Peripherie-Einheit beinhaltet, sowie für eine Antwort auf einen Lesezugriff, die die Adresse des Mikrocontrollers oder Computers, die Adresse des ausgelesenen Registers sowie die ausgelesenen Daten beinhaltet, wobei:
- jeder Peripherie-Einheit eine eindeutige Adresse zugewiesen ist,
- zur gleichen Zeit nur jeweils eine Peripherie-Einheit adressiert wird,
- in der mindestens einen Peripherie-Einheit die Baudrate eines eingehenden Datagramms ermittelt und das weitere Empfangen bzw. Senden von Datagrammen durch die Peripherie-Einheit damit synchronisiert wird, **dadurch gekennzeichnet dass**
- in jeder Peripherie-Einheit ein Datagramm-Zähler um einen Wert von 1 inkrementiert wird, wenn die betreffende Peripherie-Einheit ein an diese adressiertes Datagramm für einen Schreibzugriff empfangen hat, und beim Empfang eines Datagramms für einen Lesezugriff der Zählerstand nicht verändert wird.

2. Verfahren nach Anspruch 1,
wobei die Peripherie-Einheit die Antwort auf einen Lesezugriff an den Mikrocontroller oder Computer nach Ablauf einer vorbestimmten Verzögerungszeit nach dem Empfang eines Datagramms für den Lesezugriff überträgt.

3. Verfahren nach Anspruch 1,
bei dem nach dem Senden einer Antwort auf einen Lesezugriff die sendende Peripherie-Einheit für eine vorbestimmte Zeitdauer (Timeout) inaktiv geschaltet wird, bevor diese wieder Datagramme empfangen kann.

4. Verfahren nach Anspruch 1,
bei dem eine Peripherie-Einheit nach dem Empfang eines nicht an die eigene Adresse gerichteten Datagramms für eine vorbestimmte Zeitdauer (Timeout) inaktiv geschaltet wird, bevor diese wieder Datagramme empfangen kann.

5. Verfahren nach Anspruch 1,
bei dem empfangene Datagramme auf Vollständigkeit geprüft werden und in dem Fall, in dem innerhalb einer vorbestimmten Zeitdauer (Empfangs-Timeout) nach dem Empfang eines Teils eines Datagramms der übrige Teil des Datagramms nicht empfangen wird, der empfangene Teil des Datagramms gelöscht wird.

6. Verfahren nach Anspruch 1,
bei dem die durch den Mikrocontroller oder Computer und die Peripherie-Einheiten empfangenen Datagramme einer CRC-Fehlerprüfung unterzogen und gelöscht werden, wenn ein Fehler festgestellt wird.

7. Verfahren nach Anspruch 1,
bei dem vor dem Beginn einer Datenübertragung jeder Peripherie-Einheit jeweils eine eindeutige Adresse zugewiesen wird, wobei ein NEXTADDR-Anschluss einer ersten Peripherie-Einheit auf ein Bezugspotential und die NEXTADDR-Anschlüsse der zweiten und dritten Peripherie-Einheit usw. mit einem allgemeinen I/O Anschluss der ersten bzw. zweiten Peripherie-Einheit usw. verbunden und auf einen logischen 1-Pegel gelegt werden, so dass nur die erste Peripherie-Einheit die Adresse 0 und alle anderen Peripherie -Einheiten die Adresse 1 aufweisen und die erste Peripherie-Einheit dann auf eine gewünschte Adresse programmiert werden kann, wonach der allgemeine I/O Anschluss der ersten Peripherie-Einheit auf den Wert 0 gesetzt wird, so dass nur die zweite Peripherie-Einheit die Adresse 0 aufweist und dann die zweite Peripherie-Einheit auf eine gewünschte Adresse programmiert werden kann, usw..

8. Verfahren nach Anspruch 1,
bei dem vor dem Beginn einer Datenübertragung jeder Peripherie-Einheit eine eindeutige Adresse zugewiesen wird, wobei eine erste Peripherie-Einheit einen seriell in die Datenleitung zwischen die Dateneingangs- und Datenausgangsanschlüsse der ersten Peripherie-Einheit und die Dateneingangs- und Datenausgangsanschlüsse einer benachbarten zweiten Peripherie-Einheit geschalteten Bus-Schalter öffnet, so dass die erste Peripherie-Einheit auf eine gewünschte Adresse programmiert werden kann, und dann diesen Bus-Schalter schließt, und die zweite Peripherie-Einheit einen seriell in die Datenleitung zwischen die Dateneingangs- und Datenausgangsanschlüsse der zweiten Peripherie-Einheit und die Dateneingangs- und Datenausgangsanschlüsse einer benachbarten dritten Peripherie-Einheit geschalteten Bus-Schalter öffnet, so dass die zweite Peripherie-Einheit auf eine gewünschte Adresse programmiert werden kann, usw..

9. Peripherie-Einheit zur Anwendung in einem Verfahren nach einem der vorhergehenden Ansprüche, mit einer Schaltungsanordnung mit:
- einer Empfangseinheit (3) zum Empfangen von Datagrammen von einem Mikrocontroller oder Computer (M),
- einer Sendeeinheit (4) zum Senden von Datagrammen mit aus einem adressierten Register der Peripherie-Einheit (IC1, IC2, ...) ausgelesenen Daten an den Mikrocontroller oder Computer (M),
- einer Einheit (5) zur Ermittlung der Baudrate eines empfangenen Datagramms sowie zur Einstellung der Baudrate von gesendeten Datagrammen auf die ermittelte Baudrate, und
- einem Zähler (6) zum Zählen von empfangenen gültigen Datagrammen, die einen Befehl für einen Schreibzugriff beinhalten.

10. Peripherie-Einheit nach Anspruch 9,
mit einer Einheit (7) zur Aktivierung eines Empfangs-Timeout, wenn innerhalb einer vorbestimmten Zeitdauer nach dem Empfang eines ersten Teils eines Datagramms das Datagramm nicht vollständig empfangen worden ist.

11. Peripherie-Einheit nach Anspruch 10,
mit einer Einheit (2) zur Datensignal-Synchronisierung, die mit
- der Empfangseinheit (3) zum Empfangen von Datagrammen von einem Mikrocontroller oder Computer (M),
- der Einheit (5) zur Ermittlung der Baudrate eines empfangenen Datagramms sowie zur Einstellung der Baudrate von gesendeten Datagrammen auf die ermittelte Baudrate, und
- der Einheit (7) zur Aktivierung eines Empfangs-Timeout-Signals verbunden ist.

12. Peripherie-Einheit nach Anspruch 10,
mit einer Steuereinheit (8) zum Empfangen eines Fertig-Signals von der Empfangseinheit (3), eines Fertig-Signals von der Sendeeinheit (4), eines Fertig-Signals von der Einheit (5) zur Ermittlung der Baudrate, und eines Empfangs-Timeout-Signals von der Einheit (7), sowie zum Erzeugen eines Sende-Freigabe- bzw. Umschaltsignals für eine Umschalteinrichtung (1) zum Umschalten zwischen dem Senden und dem Empfangen von Datagrammen, und eines Start-Signals für die Sendeeinheit (4) oder eines Start-Signals für die Empfangseinheit (3).

## Claims

1. Method for serial data transmission between a microcontroller or computer and one or more peripheral units, via a single-wire data line or two differential data lines and by means of datagrams for:
- a write access including the address of a peripheral unit, the address of a register of the peripheral unit, and a data word having data to be written into the addressed register; and for:
- a read access including the address of a peripheral unit and the address of a register of the peripheral unit to be read out, and for a response to a read access including the address of the microcontroller or computer, the address of the read-out register and the read-out data, wherein:
- each peripheral unit is assigned a unique address,
- only one peripheral unit is addressed at a time,
- in the at least one peripheral unit, the baud rate of an incoming datagram is determined and the further reception or transmission of datagrams by the peripheral unit is synchronized therewith, **characterized in that**
- in each peripheral unit, a datagram counter is incremented by a value of 1 if the peripheral unit concerned has received a datagram addressed to it for a write access, and the counter reading is not changed on receipt of a datagram for a read access.

2. Method according to claim 1,
wherein the peripheral unit transmits the response to a read access to the microcontroller or computer after a predetermined delay time after receipt of a datagram for the read access.

3. Method according to claim 1,
in which, after transmitting a response to a read access, the transmitting periphery unit is switched to inactive for a predetermined period of time (timeout) before it can receive datagrams again.

4. Method according to claim 1,
in which a peripheral unit is switched to inactive for a predetermined period (timeout) after receiving a datagram not addressed to its own address, before it can receive datagrams again.

5. Method according to claim 1,
in which received datagrams are checked for completeness, and in case in which within a predetermined period of time (reception timeout) after receipt of a part of a datagram, the remaining part of the datagram is not received, the received part of the datagram is deleted.

6. Method according to claim 1,
in which the datagrams received by the microcontroller or computer and the peripheral units are subjected to a CRC error check and deleted if an error is detected.

7. Method according to claim 1,
in which a unique address is assigned to each peripheral unit prior to the start of a data transmission, wherein a NEXTADDR terminal of a first peripheral unit is connected to a reference potential and the NEXTADDR terminals of the second and third peripheral units etc. are connected to a general I/O terminal of the first and second peripheral units etc., respectively, and are set to a logical 1 level, so that only the first peripheral unit has the address 0 and all other peripheral units have the address 1 and the first peripheral unit can then be programmed to a desired address, where after the general I/O terminal of the first peripheral unit is set to the value 0, so that only the second peripheral unit has the address 0 and then the second peripheral unit can be programmed to a desired address, etc..

8. Method according to claim 1,
wherein, prior to the start of a data transmission, each peripheral unit is assigned a unique address, wherein a first peripheral unit opens a bus switch which is serially connected in the data line between the data input and data output terminals of the first peripheral unit and the data input and data output terminals of an adjacent second peripheral unit, so that the first peripheral unit can be programmed to a desired address, and then closes said bus switch, and said second peripheral unit opens a bus switch which is serially connected in the data line between the data input and data output terminals of said second peripheral unit and the data input and data output terminals of an adjacent third peripheral unit, so that the second peripheral unit can be programmed to a desired address, etc..

9. Peripheral unit for use in a method according to one of the preceding claims, comprising a circuit arrangement comprising:
- a receiving unit (3) for receiving datagrams from a microcontroller or computer (M),
- a transmitting unit (4) for transmitting datagrams with data read from an addressed register of the peripheral unit (IC1, IC2, ...) to the microcontroller or computer (M),
- a unit (5) for determining the baud rate of a received datagram and for setting the baud rate of transmitted datagrams to the determined baud rate, and
- a counter (6) for counting received valid datagrams which include a write access command.

10. Peripheral unit according to claim 9,
comprising a unit (7) for activating a reception timeout if the datagram has not been completely received within a predetermined period of time after the reception of a first part of a datagram.

11. Peripheral unit according to claim 10,
comprising a data signal synchronisation unit (2) provided with
- the receiving unit (3) for receiving datagrams from a microcontroller or computer (M),
- the unit (5) for determining the baud rate of a received datagram and for setting the baud rate of transmitted datagrams to the determined baud rate, and
- the unit (7) for activating a reception timeout signal.

12. Peripheral unit according to claim 10,
comprising a control unit (8) for receiving a ready-signal from the receiving unit (3), a ready-signal from the transmitting unit (4), a ready-signal from the unit (5) for determining the baud rate, and a reception timeout signal from the unit (7), and for generating a transmit enable signal and a switch-over signal, respectively, for a switch-over device (1) for switching between transmitting and receiving datagrams, and for generating a start signal for the transmitting unit (4) or a start signal for the receiving unit (3).

## Revendications

1. Procédé de transmission de données en série entre un microcontrôleur ou un ordinateur et une ou plusieurs unités périphériques, via une ligne de données monofilaire ou deux lignes de données différentielles et au moyen de datagrammes pour:
- un accès en écriture comprenant l'adresse d'une unité périphérique, l'adresse d'un registre de l'unité périphérique et un mot de données dont les données doivent être écrites dans le registre adressé; et pour:
- un accès en lecture comprenant l'adresse d'une unité périphérique et l'adresse d'un registre de l'unité périphérique à lire, et pour une réponse à un accès en lecture comprenant l'adresse du microcontrôleur ou de l'ordinateur, l'adresse du registre en lecture et les données lues, dans lequel:
- une adresse unique est attribuée à chaque unité périphérique,
- une seule unité périphérique est adressée à la fois,
- dans l'au moins une unité périphérique, la vitesse de transmission d'un datagramme entrant est déconnectée et la réception ou la transmission ultérieure de datagrammes par l'unité périphérique est synchronisée avec celle-ci, **caractérisé en ce que**
- dans chaque unité périphérique, un compteur de datagrammes est incrémenté d'une valeur de 1 si l'unité périphérique concernée a reçu un datagramme qui lui est adressé pour un accès en écriture, et la valeur du compteur n'est pas modifiée à réception d'un datagramme pour un accès en lecture.

2. Procédé selon la revendication 1,
dans laquelle l'unité périphérique transmet la réponse à un accès en lecture au microcontrôleur ou à l'ordinateur après un temps de retard prédéterminé après réception d'un datagramme pour l'accès en lecture.

3. Procédé selon la revendication 1,
dans laquelle, après avoir transmis une réponse à un accès en lecture, l'unité périphérique émettrice est commutée sur inactif pendant une période de temps prédéterminée (timeout) avant de pouvoir recevoir à nouveau les datagrammes.

4. Procédé selon la revendication 1,
dans laquelle une unité périphérique est mise hors service pendant une période prédéterminée (timeout) après réception d'un datagramme non adressé à sa propre adresse, avant de pouvoir recevoir à nouveau des datagrammes.

5. Procédé selon la revendication 1,
dans laquelle l'exhaustivité des datagrammes reçus est vérifiée, et dans le cas où, dans un délai prédéterminé (délai de réception) après réception d'une partie d'un datagramme, la partie restante du datagramme n'est pas reçue, la partie reçue du datagramme est supprimée.

6. Procédé selon la revendication 1,
dans lequel les datagrammes reçus par le microcontrôleur ou l'ordinateur et les unités périphériques sont soumis à un contrôle d'erreur CRC et supprimés si une erreur est détectée.

7. Procédé selon la revendication 1,
dans laquelle une adresse unique est attribuée à chaque unité périphérique avant le début d'une transmission de données, une borne NEXTADDR d'une première unité périphérique étant reliée à un potentiel de référence et les bornes NEXTADDR des deuxième et troisième unités périphériques etc. étant reliées à une borne E/S générale des première et deuxième unités périphériques etc., et sont réglés sur un niveau logique 1, de sorte que seule la première unité périphérique a l'adresse 0 et que toutes les autres unités périphériques ont l'adresse 1 et que la première unité périphérique peut ensuite être programmée à une adresse souhaitée, après quoi la borne E/S générale de la première unité périphérique est réglée sur la valeur 0, de sorte que seule la seconde unité périphérique a l'adresse 0 et ensuite la seconde unité périphérique peut être programmée à une adresse souhaitée, etc..

8. Procédé selon la revendication 1,
dans laquelle, avant le début d'une transmission de données, une adresse unique est attribuée à chaque unité périphérique, une première unité périphérique ouvrant un commutateur de bus qui est connecté en série dans la ligne de données entre les bornes d'entrée et de sortie de données de la première unité périphérique et les bornes d'entrée et de sortie de données d'une deuxième unité périphérique adjacente, de sorte que la première unité périphérique puisse être programmée à une adresse souhaitée, puis ferme ledit commutateur de bus, et ladite seconde unité périphérique ouvre un commutateur de bus qui est connecté en série dans la ligne de données entre les bornes d'entrée et de sortie de données de ladite seconde unité périphérique et les bornes d'entrée et de sortie de données d'une troisième unité périphérique adjacente, de sorte que la seconde unité périphérique puisse être programmée à une adresse souhaitée, etc..

9. Unité périphérique destinée à être utilisée dans un procédé selon l'une des revendications précédentes, comprenant un agencement de circuit comprenant:
- une unité de réception (3) pour recevoir des datagrammes d'un microcontrôleur ou d'un ordinateur (M),
- une unité de transmission (4) pour transmettre des datagrammes avec des données lues à partir d'un registre adressé de l'unité périphérique (IC1, IC2, ...) au microcontrôleur ou ordinateur (M),
- une unité (5) pour déterminer la vitesse de transmission d'un datagramme reçu et pour régler la vitesse de transmission des datagrammes transmis sur la vitesse de transmission déterminée, et
- un compteur (6) pour compter les datagrammes valides reçus qui comprennent une commande d'accès en écriture.

10. Unité périphérique selon la revendication 9,
comprenant une unité (7) pour activer une temporisation de réception si le datagramme n'a pas été complètement reçu dans une période de temps prédéterminée après la réception d'une première partie d'un datagramme.

11. Unité périphérique selon la revendication 10,
comprenant une unité de synchronisation de signal de données (2) pourvue de
- l'unité de réception (3) pour recevoir des datagrammes d'un microcontrôleur ou d'un ordinateur (M),
- l'unité (5) pour déterminer la vitesse de transmission d'un datagramme reçu et pour régler la vitesse de transmission des datagrammes transmis sur la vitesse de transmission déterminée, et
- l'unité (7) pour activer un signal de temporisation de réception.

12. Unité périphérique selon la revendication 10,
comprenant une unité de commande (8) pour recevoir un signal prêt à l'emploi de l'unité de réception (3), un signal prêt à l'emploi de l'unité de transmission (4), un signal prêt à l'emploi de l'unité (5) pour déterminer la vitesse de transmission, et un signal de temporisation de réception de l'unité (7), et pour générer un signal de validation d'émission et un signal de commutation, respectivement, pour un dispositif de commutation (1) pour commuter entre des datagrammes d'émission et de réception, et pour générer un signal de démarrage pour l'unité de transmission (4) ou un signal de démarrage pour l'unité de réception (3).
